# EUROPÄISCHE PATENTSCHRIFT

(11) **EP 0 359 992 B1**
(45) Veröffentlichungstag und Bekanntmachung des Hinweises auf die Patenterteilung: **24.03.1993**
(21) Anmeldenummer: 89115076.5
(22) Anmeldetag: 16.08.1989
(51) Int. Cl.: B25B 23/14, B25B 23/00

(54) **Geräuscharme Schrauberkupplung**
Low noise clutch for a screw driver
Embrayage silencieux pour tournevis

(30) Priorität: 21.09.1988 DE 3831960
(43) Veröffentlichungstag der Anmeldung: 28.03.1990
(73) Patentinhaber: SCINTILLA AG, CH-4500 Solothurn (CH)
(72) Erfinder: Fluri, Martin, CH-4708 Luterbach (CH)
(74) Vertreter: Voss, Klaus, Dipl.-Ing.

(56) Entgegenhaltungen:
- EP-A- 0 195 853
- DE-A- 1 403 393
- DE-A- 2 501 189
- DE-A- 3 526 732
- DE-C- 437 803
- US-A- 2 259 839
- US-A- 2 634 640
- US-A- 2 724 299
- US-A- 2 728 252
- US-A- 2 781 881
- US-E- 25 274

## Beschreibung

Die Erfindung geht von einem motorisch angetriebenen Schrauber nach dem OBERBEGRIFF des Anspruchs 1 aus wie aus der EP-A- 0195853 behannt ist. Solche Schrauber haben üblicherweise eine Kupplung im Antriebsstrang. Die Kupplung erfüllt dort die Aufgabe, bei Erreichen eines bestimmten Drehmoments den Kraftfluß zwischen motorischem Antrieb und Schraube zu unterbrechen. Eine gebräuchliche Bauart solcher Kupplungen weist stirnverzahnte Scheiben auf. Die schrägen Gleitflanken dieser Zähne bewirken eine dem Lastmoment beim Schrauben proportionale Axialkraft, die die Kupplungsscheiben voneinander entfernt und schließlich bei Erreichen des Grenzdrehmoments die Zähne außer Eingriff bringt und so den Kraftfluß unterbricht. Da nach dem Auskuppeln die Zahnspitzen aufeinander schleifen, was unerwünschtes Geräusch und Verschleiß nach sich zieht, setzt man dreischeibige Kupplungen mit zwei hintereinander angeordneten Stirnverzahnungen ein, von denen eine Zahnpaarung nach dem Trennen der zweiten noch tiefer in Eingriff kommt und so eine Berührung der letzteren nach dem Ansprechen der Kupplung verhindert. Diese aus der DE-PS 4 37 803 bekannte Lehre hat jedoch den Nachteil, daß nach dem Auskuppeln der Wiedereingriff der Nockenpaarung über einen separaten Hebel herbeigeführt werden muß. Einfacher im Aufbau ist die Kupplung nach der DE-A- 35 10 605 (US-A- 4 655 103), die die oben erwähnte dreischeibige Bauart mit einer aus der DE-A- 25 26 004 (US-A- 3 960 035) bekannten Zahnform kombiniert, die eine Klaue mit Anlaufschräge darstellt. Nachteilig ist außerdem die Tatsache, daß diese Kupplung unabhängig von der Drehrichtung anspricht. Gerade beim Lösen von Schrauben sind die Anforderungen an den Drehmomentverlauf jedoch anders als beim Festdrehen, denn beim Schraubenlösen wird zu Beginn ein sehr hohes Moment besonders dann erforderlich sein, wenn eine Schraube z.B. infolge Korrosion sehr fest sitzt; im weiteren Verlauf des Losschraubens wird dann immer weniger Drehmoment benötigt. Umgekehrt verhält es sich beim Eindrehen von Schrauben; hier ist besonders ein ratterfreies Unterbrechen des Kraftflusses bei Erreichen des Grenzdrehmoments erwünscht.

### Vorteile der Erfindung

Die erfindungsgemäße Kupplung hat den Vorteil, beim Lösen festsitzender Schrauben das volle vom Motor zur Verfügung gestellte Drehmoment auf die Schraube zu übertragen, ohne daß hierfür eine Neueinstellung oder manuelle Umschaltung vorgenommen werden müßte. Beim Eindrehen von Schrauben wird nach Erreichen des Grenzdrehmoments der Kraftfluß geräuscharm und verschleißfrei unterbrochen. Außerdem werden zum Aufbau der Kupplung nur wenige Einzelteile benötigt, sie ist robust, einfach herstellbar und montierbar.

Ein besonderer Vorteil ergibt sich daraus, daß beim Beginn des Einschraubvorgangs die parallel zu ihrer Rotationsachse verschiebliche Kupplungsscheibe auf einer Schrägbahn in die Betriebsstellung gleitet, die durch einen festen Anschlag definiert ist. Diese Anordnung erlaubt den Verzicht auf eine spezielle, verschleißgefährdete Rastnut oder Unterbrechung in der Schrägbahn.

### Zeichnung

Ein Ausführungsbeispiel der Erfindung ist in Figur 1 im Schnitt dargestellt und in der nachfolgenden Beschreibung näher erläutert. Die Wirkungsweise der erfindungsgemäßen Anordnung ist aus den Figuren 2 bis 5 ersichtlich, in denen die wesentlichen Kupplungsteile in ihren verschiedenen Funktionsstellungen in Seitenansicht dargestellt sind. Figur 6 zeigt ein weiteres Ausführungsbeispiel der Erfindung im Schnitt.

### Beschreibung des Ausführungsbeispiels

Der Schrauber hat einen hier nicht dargestellten Motor, der über ein ebenfalls nicht abgebildetes Getriebe eine Antriebswelle 1 antreibt. Letztere hat an ihrem vorderen (das ist das dem Werkstück zugewandte) Ende im äußeren Bereich der Stirnseite nockenförmige Kupplungsglieder 2. Im Innern des von den Kupplungsgliedern 2 gebildeten Kranzes befindet sich eine dreifach abgestufte Bohrung 3, in der eine Feder 4 und ein Wälzlager 5 angeordnet sind. In Letzterem ist das hintere Ende einer ebenfalls gestuften Abtriebswelle 6 axial verschiebbar geführt. Im mittleren Bereich der Abtriebswelle 6 ist auf einem Absatz 7 ein Kupplungsring 8 drehbar und ebenfalls axial verschiebbar angeordnet.

Nach hinten ist der Weg des Kupplungsringes 8 durch einen auf die ABTRIEBSWELLE 6 geschobenen und dort mit einer Wellensicherung 9 gegen den Absatz 7 fixierten Anschlagring 10 begrenzt. Nach vorne begrenzt ein Wellenbund 11 den Weg des Kupplungsringes 8. Die Abtriebswelle 6 hat am vorderen Ende ein sechskantiges Sackloch 12 zur Aufnahme eines Schrauberbits 13.

Der Kupplungsring 8 wird von der Feder 4 gegen den Wellenbund 11 gedrückt und trägt an seiner hinteren Stirnseite nockenförmige Kupplungsglieder 14, die mit den auf der Antriebswelle 1 angeordneten Kupplungsgliedern 2 zusammenwirken. Die vordere Stirnseite des Kupplungsringes 8 trägt drei rampenförmige Erhebungen 15, die mit entsprechenden Ausnehmungen 16 im Wellenbund 11 korrespondieren. Das vordere Ende der Antriebswelle 1 wie auch das der Abtriebswelle 6 ist jeweils in Lagern 17 bzw. 18 geführt, die in einer Führungshülse 19 angeordnet sind. Diese Führungshülse 19 ist fest mit dem z.B. aus Kunststoff gefertigten Gehäuse 20 des Schraubers verbunden.
Die Führungshülse 19 trägt im vorderen Bereich ein Außengewinde 21, auf das eine Gewindehülse 22 mit einem entsprechenden Innengewinde aufgeschraubt ist. Die Gewindehülse 22 ist fest mit einem Tiefenanschlag 23 mit eingelegtem permanentmagnetischen Ring 24 verbunden, der durch Drehung um das Außengewinde 21 in bekannter Weise axial verstellt werden kann.

Auf der Abtriebswelle 6 sitzen zwei Wellendichtungen 25 und 26. Eine davon ist in der Führungshülse 19, die andere im Tiefenanschlag 23 angeordnet.

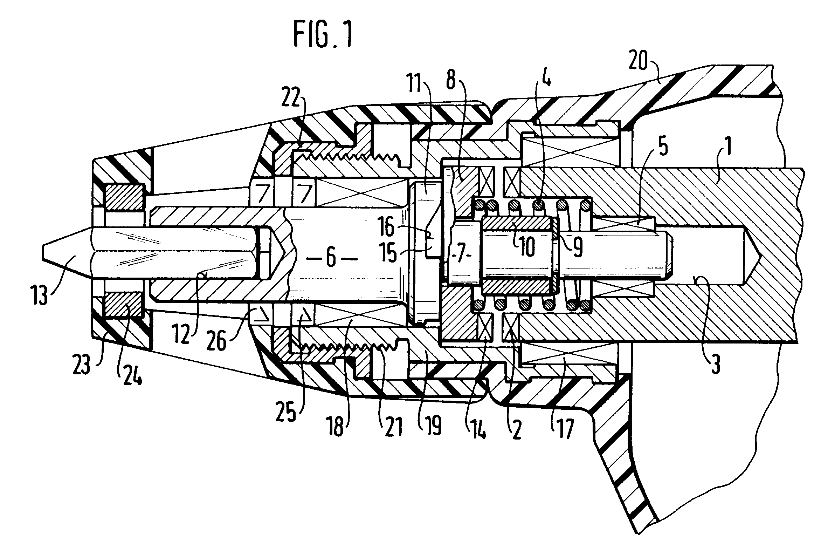

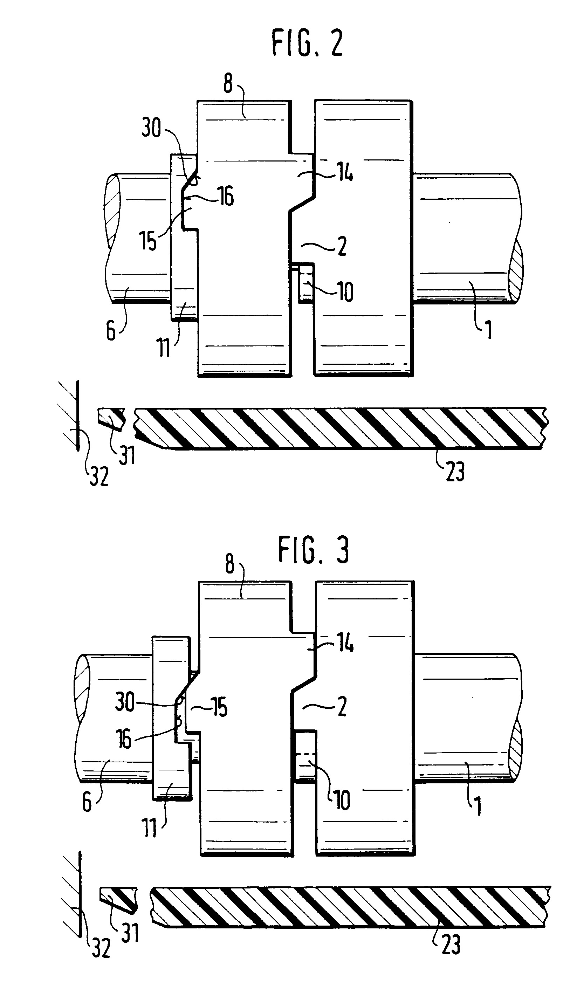

Aus den Phasendarstellungen in den Figuren 2 bis 5 ist die Wirkungsweise der erfindungsgemäßen Kupplung zu erkennen. Schematisch sind dort die aus Figur 1 bekannten rampenförmigen Erhebungen 15 und die Paarungen der nockenförmigen Kupplungsglieder 2, 14 in verschiedenen Phasen eines Einschraubvorganges abgebildet. Zu Beginn des Einschraubvorganges befinden sich die Kupplungsglieder 2, 14 im Eingriff, auch die rampenförmigen Erhebungen 15 sind vollständig in die Ausnehmungen 16 versenkt, weil der Bediener den Schrauber nach dem Aufsetzen auf den hier nicht dargestellten Kopf der in die angedeutete Wand 32 einzudrehenden Schraube in die Einschraubrichtung gegen den Widerstand der Feder 4 drückt. (Die Feder 4 ist allerdings in den Figuren 2 bis 5 nicht abgebildet). Diese Situation nach Aufsetzen auf die einzudrehende Schraube und vor dem Einschalten des Antriebs ist in Figur 2 skizziert.

Figur 3 zeigt den Zustand nach Einschalten des motorischen Antriebs. Infolge des Gegendrehmoments der Schraube (Lastmoment) gleitet der Kupplungsring 8 auf der Schrägfläche 30 der Ausnehmung 16 nach hinten, bis er sich an den Anschlagring 10 anlegt.

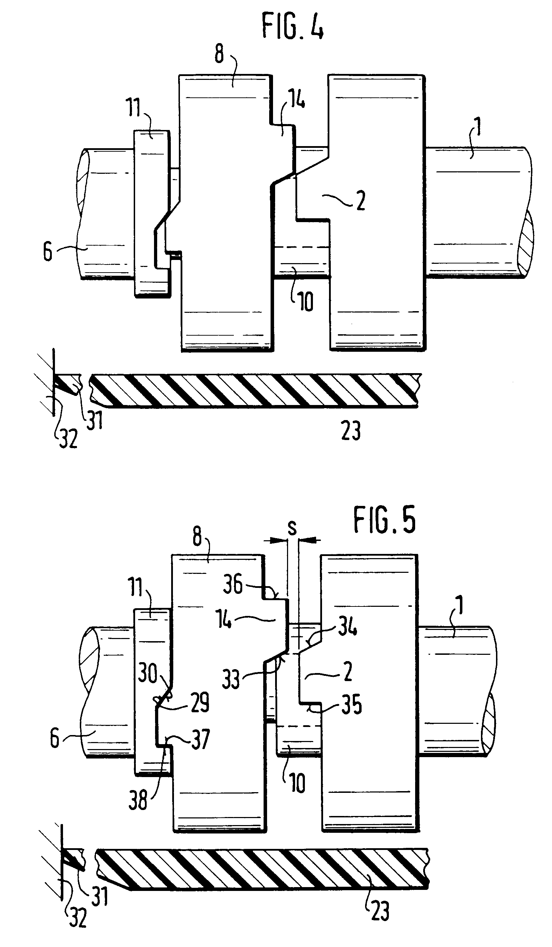

In Figur 4 ist dargestellt, wie das zunehmende Lastmoment beim Einschrauben und das gleichzeitige Aufsetzen des vorderen Endes 31 des Tiefenanschlags 23 auf der Wand 32, in die die Schraube eingedreht wird, schließlich das Auseinandergleiten der Kupplungsglieder 2, 14 gegen Ende des Verschraubungsvorganges bewirken.

Sobald das vordere Ende 31 des Tiefenanschlags 23 auf der Wand 32 aufsetzt, wird die von der Bedienperson in Vorschubrichtung aufgebrachte Kraft über das Gehäuse 20 statt über den Antriebsstrang übertragen. Dadurch kann die Kraft der Feder 4 die Kupplungsglieder 2, 14 außer Eingriff bringen, wobei der Kupplungsring 8 eine der Einschraubdrehrichtung entgegengesetzte Drehung verbunden mit einer axialen Verschiebung ausführt.

In Figur 5 ist zu sehen, wie sich endlich - unterstützt von der nicht dargestellten Feder 4 - der Kupplungsring 8 an den Wellenbund 11 anlegt. Dadurch entsteht ein Sicherheitsabstand s, der eine Berührung der Kupplungsglieder 2, 14 sicher verhindert.

Zum Lösen von Schrauben läuft der Motor entgegengesetzt zur Eindrehrichtung an. Hierbei treffen statt der schrägen Auflaufflächen 33, 34 an den Kupplungsgliedern 2 und 14 deren senkrecht zur Stirnseite des Kupplungsrings 8 angeordnete Flächen 35, 36 aufeinander. Auch die rampenförmigen Erhebungen 15 haben ebenso wie die mit ihnen korrespondierenden Ausnehmungen 16 auf der den Schrägflächen 29, 30 gegenüberliegenden Seite senkrechte Flächen 37 bzw. 38, die nun bei Drehung entgegen der normalen Arbeits-Drehrichtung aufeinander treffen. Es entsteht dabei keine Axialkraft, die die Kupplung zum Auskuppeln bringen könnte, weshalb in dieser Drehrichtung stets das gesamte Moment des Antriebsmotors übertragbar ist.

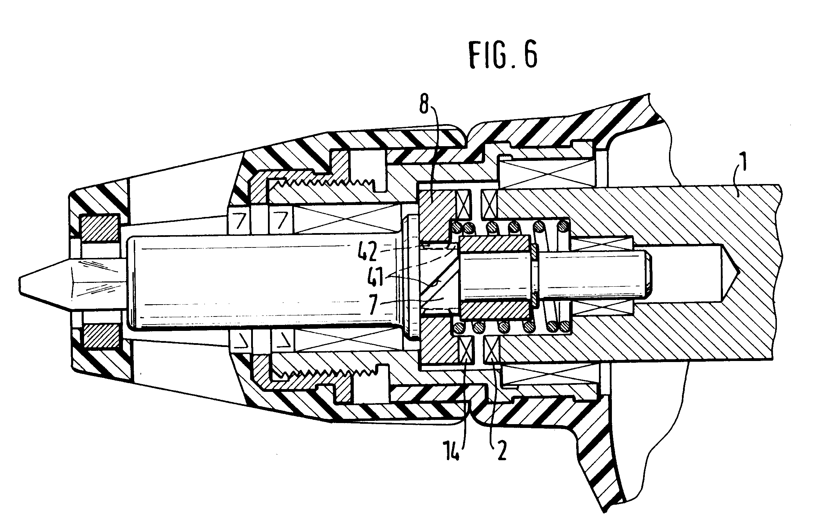

Der gleiche Effekt wird mit der in Figur 6 dargestellten Konstruktionsvariante erzielt. Diese unterscheidet sich von der vorstehend beschriebenen lediglich dadurch, daß hier die Ausnehmungen 16 im Wellenbund 11 durch Schrägnuten 41 im Absatz 7 ersetzt sind. Drei dieser Schrägnuten 41 sind gleichmäßig am Umfang des Absatzes 7 verteilt und stellen die Gewindegänge eines Bewegungsgewindes dar. In die Schrägnuten greifen zugeordnete Nasen 42 an der Innenseite des Kupplungsringes 8 ein. Die Steigung der Schrägnuten 41 verläuft so, daß beim Eindrehen von Schrauben aus dem dabei entstehenden Lastmoment ebenso wie in der vorstehend dargestellten Konstruktionsvariante eine axial gerichtete Kraftkomponente entsteht, die den Kupplungsring 8 gegen die Antriebswelle 1 drückt, mithin die Kupplungsglieder 2 und 14 in Eingriff zueinander bringt. Das Funktionsprinzip dieser Konstruktionsvariante unterscheidet sich nicht von dem der vorstehend beschriebenen.

## Patentansprüche

1. Motorisch angetriebener Schrauber mit Schraubwerkzeug, mit einem Gehäuse mit einem daran befestigten Tiefenanschlag (31), sowie mit einer in einem Antriebsstrang angeordneten Kupplung, bestehend aus drei Kupplungselementen(1, 8, 6) mit nockenartigen Kupplungsgliedern (2, 14, 15, 16), die gegen die Kraft einer Feder (4) in Eingriff bringbar sind, wobei das erste Kupplungselement eine gegenüber dem Gehäuse unverschieblich gelagerte Antriebswelle (1) und das zweite Kupplungselement ein drehbeweglich und axial verschiebbar gelagerter Kupplungsring (8) ist, der sich abstützt auf dem dritten Kupplungselement, welches eine axial verschiebbare Abtriebswelle (6) ist, deren Kupplungsglieder (2, 14) mit schrägen Flächen (33, 34) versehen sind und deren Steigung so verläuft, daß sich der Kupplungsring (8) bei Drehung relativ zur Abtriebswelle (6) in deren Arbeitsdrehrichtung, beim Einschrauben, axial in Ausrückrichtung der Kupplungsglieder (2, 14) bewegt, dadurch gekennzeichnet, daß die AXIALE Bewegung des Kupplungsringes (8) durch ANSTOßEN GEGEN auf der Abtriebswelle (6) angeordnete Schultern (10, 11) begrenzt wird.

2. Schrauber nach Anspruch 1, dadurch gekennzeichnet, daß eine die Bewegung des Kupplungsringes (8) in Ausrückrichtung begrenzende erste Schulter als an die Abtriebswelle (6) angeformter Wellenbund (11) ausgeführt ist.

3. Schrauber nach Anspruch 1 oder 2, dadurch gekennzeichnet, daß eine die Bewegung des Kupplungsringes (8) in Einrückrichtung begrenzende zweite Anschlagschulter als auf die Abtriebswelle (6) aufgesteckter Anschlagring (10) ausgebildet ist.

4. Schrauber nach Anspruch 3, dadurch gekennzeichnet, daß die Feder als Schraubenfeder (4) ausgebildet ist, deren Innendurchmesser größer als der Außendurchmesser des Anschlagrings (10) ist.

5. Schrauber nach einem der Ansprüche 1 bis 4, dadurch gekennzeichnet, daß die am Kupplungsring (8) und an der Abtriebswelle (6) angeordneten schrägen Flächen als rampenförmige Erhebungen (15) auf der den Kupplungsgliedern (14) gegenüberliegenden Stirnseite des Kupplungsringes (8) ausgebildet sind, die mit korrespondierenden Ausnehmungen (16) in der Abtriebswelle (6) zusammenwirken.

6. Schrauber nach einem der vorhergehenden Ansprüche, dadurch gekennzeichnet, daß die am Kupplungsring (8) und an der Abtriebswelle (6) angeordneten schrägen Flächen als Bewegungsgewinde ausgeführt sind.

7. Schrauber nach einem der vorhergehenden Ansprüche, dadurch gekennzeichnet, daß die Kupplungsglieder (2, 14) auf den - etwa in Arbeitsdrehrichtung gesehen - auflaufenden Seiten schräge Flächen (33, 34), auf den anderen Seiten senkrecht zur Stirnseite des Kupplungsrings (8) angeordnete Flächen (35, 36) haben.

8. Schrauber nach einem der vorhergehenden Ansprüche, dadurch gekennzeichnet, daß die antreibenden Kupplungsglieder (2) an die Antriebswelle (1) angeformt sind.

## Claims

1. Motor-driven screwdriver having a screwing tool, having a housing exhibiting a thereto attached bit stop (31), and having a clutch, disposed in a drive line, comprising three clutch elements (1, 8, 6) having cam-like clutch members (2, 14, 15, 16), which can be brought into engagement against the force of a spring (4), the first clutch element being a drive shaft (1), which is non-displaceably mounted in relation to the housing, and the second clutch element being a clutch ring (8), which is rotationally and axially displaceable and is supported on the third clutch element, which is an axially displaceable power take-off shaft (6), the clutch members (2, 14) of which are provided with inclined surfaces (33, 34) and the incline of which runs such that the clutch ring (8), when rotated relative to the power-take off shaft (6) in the latter's working direction of rotation, whenever screwing-in takes place, moves axially in the direction of disengagement of the clutch members (2, 14), characterised in that the axial movement of the clutch ring (8) is limited by abutment against shoulders (10, 11) disposed on the power take-off shaft (6).

2. Screwdriver according to Claim 1, characterised in that a first shoulder limiting the movement of the clutch ring (8) in the direction of disengagement is designed as a shaft collar (11) formed onto the power take-off shaft (6).

3. Screwdriver according to Claim 1 or 2, characterised in that a second stop shoulder limiting the movement of the clutch ring (8) in the direction of engagement is configured as a stop ring (10) mounted onto the power take-off shaft (6).

4. Screwdriver according to Claim 3, characterised in that the spring is configured as a helical spring (4), the inner diameter of which is greater than the outer diameter of the stop ring (10).

5. Screwdriver according to one of Claims 1 to 4, characterised in that the inclined surfaces disposed on the clutch ring (8) and on the power take-off shaft (6) are configured as ramp-shaped elevations (15) on the face of the clutch ring (8) lying opposite the clutch members (14), which elevations interact with corresponding recesses (16) in the power take-off shaft (6).

6. Screwdriver according to one of the preceding claims, characterised in that the inclined surfaces disposed on the clutch ring (8) and on the power take-off shaft (6) are designed as motional threads.

7. Screwdriver according to one of the preceding claims, characterised in that the clutch members (2, 14) have on the butting sides - viewed approximately in the working direction of rotation - inclined surfaces (33, 34), on the other sides surfaces (35, 36) which are disposed perpendicularly to the face of the clutch ring (8).

8. Screwdriver according to one of the preceding claims, characterised in that the driving clutch members (2) are formed onto the drive shaft (1).

## Revendications

1. Visseuse avec embout de vissage, un carter et une butée de profondeur (31) fixée sur celui-ci, ainsi qu'avec un embrayage disposé dans une section d'entraînement consistant en trois éléments d'accouplement (1, 8, 6) avec des organes d'accouplement (2, 14, 15, 16) du type à cames, qui peuvent être mis en prise contre la force d'un ressort (4), le premier élément d'accouplement étant un arbre d'entraînement (1) monté de façon non translatable par rapport au carter, et le deuxième élément d'accouplement étant une bague d'accouplement (8) montée axialement de façon à pouvoir coulisser et mobile en rotation, s'appuyant sur le troisième élément d'accouplement, qui est un arbre de sortie (6) pouvant coulisser axialement, dont les organes d'accouplement (2, 14) sont pourvus de surfaces obliques (33, 34) et dont la pente se déroule de telle façon que la bague d'accouplement (8) se déplace axialement dans le sens retour des organes d'accouplement (2, 14) lors de la rotation par rapport à l'arbre de sortie (6) dans le sens de rotation dans lequel celui-ci fonctionne, lors du vissage, visseuse caractérisée en ce que le mouvement axial de la bague d'accouplement (8) est limité par des épaulements (10, 11) disposés de façon à venir en butée sur l'arbre de sortie (6).

2. Visseuse selon la revendication 1, caractérisée en ce qu'un premier épaulement limitant le mouvement de la bague d'accouplement (8) dans le sens retour est réalisé comme un collet d'arbre (11) formé sur l'arbre de sortie (6).

3. Visseuse selon la revendication 1 ou 2, caractérisée en ce qu'un deuxième épaulement de butée limitant le mouvement de la bague d'accouplement (8) dans le sens de la mise en prise est formé comme une bague de butée (10) enfilée sur l'arbre de sortie (6).

4. Visseuse selon la revendication 3, caractérisée en ce que le ressort est formé comme un ressort hélicoïdal (4), dont le diamètre intérieur est plus grand que le diamètre extérieur de la bague de butée (10).

5. Visseuse selon l'une des revendications 1 à 4, caractérisée en ce que les surfaces obliques disposées sur la bague d'accouplement (8) et sur l'arbre de sortie (6) sont formées comme des surélévations (15) en forme de rampes sur la face frontale de la bague d'accouplement (8) située en regard des organes d'accouplement (14), surélévations qui coopèrent avec des évidements correspondants (16) dans l'arbre de sortie (6).

6. Visseuse selon l'une des revendications précédentes, caractérisée en ce que les surfaces obliques disposées sur la bague d'accouplement (8) et sur l'arbre de sortie (6) sont réalisées comme des filetages de mouvement.

7. Visseuse selon l'une des revendications précédentes, caractérisée en ce que les organes d'accouplement (2, 14) ont des surfaces obliques (33, 34) sur les côtés d'accueil - vu à peu près dans le sens de rotation du fonctionnement - et des surfaces (35, 36) disposées sur les autres côtés perpendiculairement à la face frontale de la bague d'accouplement (8).

8. Visseuse selon l'une des revendications précédentes, caractérisée en ce que les organes d'embrayage (2) assurant l'entraînement sont formés sur l'arbre d'entraînement (1).
